# EUROPÄISCHE PATENTSCHRIFT

(11) **EP 2 539 097 B1**
(45) Veröffentlichungstag und Bekanntmachung des Hinweises auf die Patenterteilung: **25.12.2013**
(21) Anmeldenummer: 11713460.1
(22) Anmeldetag: 24.02.2011
(51) Int. Cl.: B23C 5/20

(54) **SCHNEIDEINSATZ**
CUTTING INSERT
PLAQUETTE DE COUPE

(30) Priorität: 25.02.2010 AT 10610 U
(43) Veröffentlichungstag der Anmeldung: 02.01.2013
(73) Patentinhaber: Ceratizit Austria GmbH, 6600 Reutte (AT)
(72) Erfinder: BURTSCHER, Peter, A-6651Häselgehr (AT)
(86) Internationale Anmeldenummer: PCT/AT2011/000091
(87) Internationale Veröffentlichungsnummer: WO 2011/103609

(56) Entgegenhaltungen:
- DE-A1- 10 308 234
- FR-A1- 2 483 819
- US-A1- 2008 304 924

## Beschreibung

Die Erfindung betrifft einen Schneideinsatz mit im Wesentlichen dreieckförmiger oder quadratischer Grundform mit einer Deckfläche und einer Grundfläche, die durch seitliche Freiflächen miteinander in Verbindung stehen, wobei durch die Verschneidung von Deckfläche und/oder Grundfläche mit den Freiflächen jeweils drei bzw. vier, in Draufsicht gesehen, konvexe Schneidkanten ausgebildet sind, die jeweils zumindest aus einem Kreisbogen und mindestens einem im Wesentlichen geraden Abschnitt bestehen und die über Schneidecken mit einem Eckenradius Re miteinander in Verbindung stehen.

Ein derartiger Schneideinsatz ist in der EP 1 689 548 beschrieben. Schneideinsätze dieser Art werden in erster Linie zum Planfräsen mit hohen Vorschubraten in der Größenordnung von 0,5 bis 3 mm/Zahn bei geringen Schnitttiefen bis maximal 2 mm eingesetzt, um Planflächen möglichst effizient zu zerspanen.

In einer bevorzugten Ausgestaltung eines Schneideinsatzes entsprechend dieser Entgegenhaltung liegt der Radius des Kreisbogens in einem Bereich, der größer und zumindest zweimal so groß wie der Radius des Inkreises ist. Durch diese Vorgabe wird die mögliche Winkelgestaltung zwischen Hauptschneide und Planschneide für die konstruktive Auslegung des Schneideinsatzes auf einen verhältnismäßig kleinen Bereich beschränkt. Darüber hinaus weist der Schneideinsatz keine umlaufende Schneidkantenfase auf, so dass die Festigkeit der Schneidkanten, insbesondere beim Fräsen von Absätzen und Schultern oftmals nicht ausreichend stabil ist.

FR 2 483 819 A1 zeigt einen Schneideinsatz für eine Drehbearbeitung mit einer prismatischen Form, wobei die Grundfläche des Prismas durch ein gleichseitiges Dreieck mit gekrümmten Linien gebildet ist, dessen Ecken abgerundet sind, sowie eine Verwendung einer Mehrzahl solcher Schneideinsätze für eine Drehbearbeitung.

Die Aufgabe der Erfindung ist es daher, einen Schneideinsatz, insbesondere zum Fräsen mit hohen Vorschubraten zu schaffen, bei dem der Bereich der Winkelgestaltung zwischen Planschneide und Hauptschneide für die konstruktive Auslegung des Schneideinsatzes möglichst groß ist und gleichzeitig die Schneidkantenfestigkeit optimal ist, ohne dass die Eignung des Schneideinsatzes zur Zerspanung mit hohen Vorschubraten verloren geht.

Erfindungsgemäß wird dies dadurch erreicht, dass jede Schneidkante anschließend an eine Schneidecke eine gerade Planschneide aufweist, welche mit einem kreisförmigen Abschnitt mit einem Radius von maximal 80 % vom Radius Ri des Inkreises in eine Hauptschneide aus 1 bis 3 geraden Abschnitten übergeht, wobei bei mehreren geraden Abschnitten der Hauptschneide die Übergangsbereiche zwischen diesen Abschnitten kreisförmig mit einem Radius im Bereich von 50 % bis 200 % vom Radius Ri des Inkreises ausgeführt sind und dass der Schneideinsatz weiters eine rundum laufende Schneidkantenfase mit einem Fasenwinkel α aufweist, welcher im Wesentlichen entlang der Schneidecken einen im Wesentlichen konstanten Wert im Bereich von -10° bis -20° aufweist und sich beidseitig anschließend an die Schneidecken entlang eines Teilstückes der Planschneide bzw. der Hauptschneide, das im Bereich von 1 - 1,8 x dem Radius Re der Schneidecke liegt, kontinuierlich auf einen im Wesentlichen konstanten Wert, entlang der restlichen Abschnitte von Planschneide und Hauptschneide sowie entlang dem kreisförmigen Abschnitt ändert, der im Bereich von 0° bis -10° liegt.

Dadurch, dass der kreisförmige Abschnitt einen Radius von maximal 80 % vom Radius Ri des Inkreises aufweist, ist der Winkel zwischen Hauptschneide und Planschneide in einem sehr weiten Bereich bei der konstruktiven Ausgestaltung des Schneideinsatzes gestaltbar, wodurch die Krafteinienkung in das Werkzeug bei der Zerspanung und die Spanbildung selbst besser optimiert werden können. Durch den speziellen Verlauf der Schneidkantenfase innerhalb der festgelegten Bereiche wird eine optimale Schneidkantenfestigkeit vor allem auch im Bereich der Schneidecke auch bei schwierigen Zerspanungsoperationen wie dem Fräsen von Schultern und Absätzen erreicht, ohne dass Nachteile bei der Zerspanung mit hohen Vorschüben auftreten.

In einer bevorzugten Ausgestaltung der Erfindung weist der kreisförmige Abschnitt einen Radius von minimal 50 % vom Radius Ri des Inkreises auf. Wenn diese Untergrenze für den Radius des kreisförmigen Abschnittes eingehalten wird ist gewährleistet, dass der kreisförmige Abschnitt, für alle normalerweise während der Zerspanung auftretenden Belastungen, eine ausreichende Festigkeit aufweist.

In einer weiteren vorteilhaften Ausgestaltung weist der Fasenwinkel α im Wesentlichen entlang der Schneidecken einen konstanten Wert von etwa -15° und im konstanten Bereich entlang der Planschneide, entlang dem kreisförmigen Abschnitt und im konstanten Bereich entlang der Hauptschneide einen Wert von etwa 0° auf. Die Breite der Schneidkantenfase liegt dabei vorteilhafterweise in einem Bereich von 0,1 bis 0,4 mm. Unter diesen Bedingungen wird die optimale Festigkeit der Schneidkanten während der üblicherweise auftretenden Beanspruchungen während der Zerspanung gewährleistet.

In einer ebenfalls bevorzugten Ausgestaltung der Erfindung beträgt die Länge der Planschneide wenigstens 15 % vom Radius Ri des Inkreises. Auf diese Weise wird bei den üblichen großen Vorschüben noch eine ausreichend ebene Oberfläche erreicht.

Wenn der Schneideinsatz so ausgestaltet ist, dass die einzelnen Schneidkanten symmetrisch aufgebaut sind wird erreicht, dass der Schneideinsatz sowohl für rechtslaufende, als auch für linkslaufende Schneidwerkzeuge verwendet werden kann.

Wenn darüber hinaus sowohl an der Verschneidung der Deckfläche als auch an der Verschneidung der Grundfläche mit den seitlichen Freiflächen Schneidkanten ausgebildet sind, kann der Schneideinsatz doppelseitig eingesetzt werden, so dass je nach Form des Schneideinsatzes insgesamt 6 oder 8 Schneidkanten zur Verfügung stehen.

Weiters ist es von Vorteil, wenn die seitlichen Freiflächen mit Abstand von den Schneidkanten plane Anlageflächen aufweisen. Mit Hilfe dieser Anlageflächen wird eine sichere Positionierung des Schneideinsatzes in einem entsprechend ausgeführten Plattensitz im Grundkörper des zugehörigen Schneidwerkzeuges ermöglicht.

Besonders vorteilhaft ist es auch, wenn die Freiflächen anschließend an die Planschneide und die geraden Abschnitte der Hauptschneidkanten als plane Flächen und anschließend an die kreisförmigen Abschnitte als zylinderförmige Flächen ausgeführt sind.

Durch diese weiteren planen Flächen unmittelbar anschließend an die Schneidkanten werden zusätzliche Anlageflächen geschaffen, die erforderlichenfalls eine noch bessere Positionierung und Anlage des Schneideinsatzes im Plattensitz des Werkzeuggrundkörpers ermöglichen.

Um eine optimale Spanbildung während der Zerspanung zu erreichen ist es von Vorteil, wenn die Deckfläche und/oder die Grundfläche anschließend an die Schneidkantenfase eine spanbrechende Geometrie aufweist.

Im Folgenden wird die Erfindung an Hand von Figuren näher erläutert.

Es zeigen:
- Figur 1: einen erfindungsgemäßen Schneideinsatz in perspektivischer Ansicht
- Figur 2: die Draufsicht auf den Schneideinsatz nach Figur 1
- Figur 3: einen Ausschnitt des Schnittes R-R nach Figur 2 in vergrößerter Ansicht
- Figur 4: einen Ausschnitt des Schnittes S-S nach Figur 2 in vergrößerter Ansicht
- Figur 5: einen Ausschnitt des Schnittes T-T nach Figur 2 in vergrößerter Ansicht
- Figur 6: ein Fräswerkzeug mit mehreren eingebauten Schneideinsätzen entsprechend Figur 1 und Figur 2

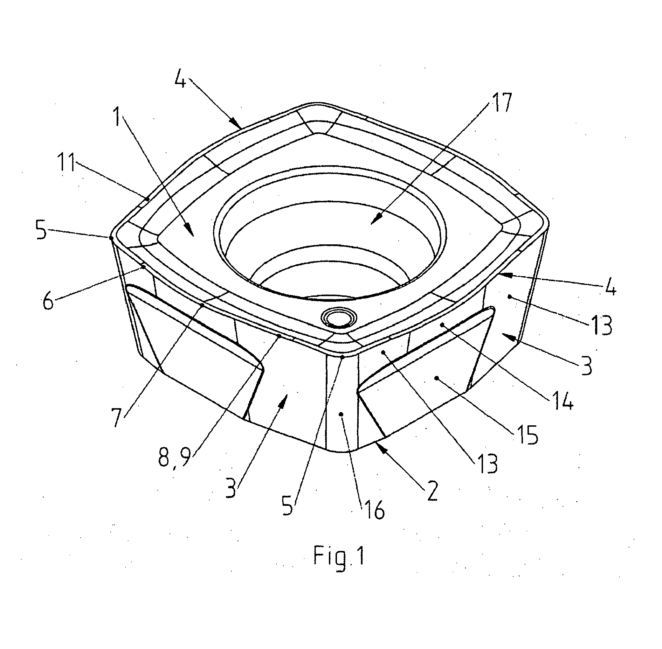

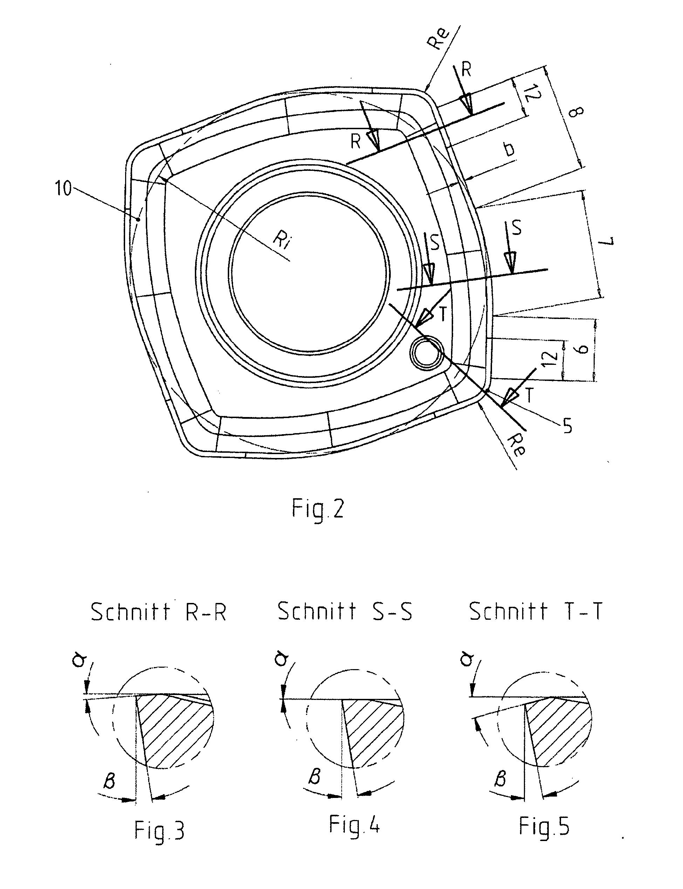

In den Figuren 1 und 2 ist ein erfindungsgemäßer Schneideinsatz mit quadratischer Grundform einmal in perspektivischer Ansicht und einmal in Draufsicht dargestellt. Der Schneideinsatz weist eine Deckfläche -1-, eine Grundfläche -2- und konvex verlaufende seitliche Freiflächen -3- auf, welche zur Deckfläche -1- unter einem Freiwinkel β geneigt verlaufen. An der Verschneidung von Deckfläche -1- und Freiflächen -3- sind konvexe Schneidkanten -4- gebildet. Jede Schneidkante -4- weist anschließend an eine Schneidecke -5- eine gerade Planschneide -6- auf. Die Planschneide -6- geht dann mit einem kreisförmigen Abschnitt -7- in eine Hauptschneide -8- über, welche aus einem geraden Abschnitt -9- besteht. Der kreisförmige Abschnitt -7-weist einen Radius von 70 % vom Radius Ri des Inkreises -10- auf. Als Inkreis -10- wird der theoretische unter Berührung aller vier Schneidkanten -4-in die Deckfläche -1- des Schneideinsatzes eingeschriebene Kreis bezeichnet. Die Hauptschneide besteht im vorliegenden Fall aus einem einzigen geraden Abschnitt -9-, aber es sind genauso Varianten mit bis zu drei dieser geraden Abschnitte -9- denkbar, welche durch kreisförmige Übergangsbereiche miteinander verbunden sind. Diese kreisförmigen Übergangsbereiche sind dann mit einem Radius im Bereich von 50 % bis 200 % vom Radius Ri des Inkreises -10- ausgeführt. Angrenzend an die Schneidkanten -4- weist der Schneideinsatz eine rundum laufende Schneidkantenfase -11- auf. Der Fasenwinkel α den diese Schneidkantenfase -11- mit der Ebene der Deckfläche -1- einschließt, weist im Wesentlichen entlang der Schneidecken -5-einen Wert von -15° auf. Der Fasenwinkel α in diesem Bereich ist in Figur 5 als Ausschnitt des Schnittes T-T in Figur 2 dargestellt. Beidseitig anschließend an jede Schneidecke -5- ändert sich dieser Fasenwinkel α kontinuierlich entlang eines Teilstückes der Planschneide bzw. der Hauptschneide kontinuierlich auf einen Wert von 0° entlang der restlichen Abschnitte von Planschneide -6- und Hauptschneide -8- sowie entlang dem kreisförmigen Abschnitt -7-. Dieser Fasenwinkel α ist in Figur 4 entsprechend dem Schnitt S-S in der Figur 2 dargestellt. Die Länge der Teilstücke -12- entlang dem sich der Fasenwinkel α entlang der Planschneide -6- und Hauptschneide -8- kontinuierlich ändert, entspricht etwa 1,5 Mal dem Radius Re der Schneidecke -5-. Ein bestimmter Fasenwinkel α innerhalb dieses Bereiches ist in Figur 3 entsprechend dem Schnitt R-R in der Figur 2 dargestellt. Bei allen Schneidkanten -4- sind die Freiflächen -3- anschließend an die Planschneide -6- und an die Hauptschneide -8- als plane Flächen -13- ausgeführt und die Freiflächen -3-anschließend an die kreisförmigen Abschnitte -7- als zylinderförmige Flächen -14- ausgeführt. Die Freiflächenabschnitte -16-, anschließend an die Schneidecken -5-, sind ebenfalls als zylinderförmige Flächen ausgeführt. Zylinderförmig ist dabei so zu verstehen, dass die Radien dieser Fläche in jeder Höhenlage entlang der Gesamthöhe der Freifläche -3- an dieser Stelle immer gleich groß sind. Mit etwas Abstand von den Schneidkanten -4- sind in den seitlichen Freiflächen plane Anlageflächen -15- vorgesehen. Sie dienen zur sicheren Positionierung des Schneideinsatzes im Plattensitz des Zerspanungswerkzeuges in dem sie eingesetzt werden. Die Deckfläche -1- des Schneideinsatzes ist mit einer spanbrechenden Geometrie versehen und zwar in der Form, dass anschließend an die Schneidkantenfase -11- nach unten abfallende Flanken vorgesehen sind, welche dann in einen ebenen zentralen Mittelbereich der bis zum Mittelloch -17- des Schneideinsatzes führt, übergehen. Auf diese Weise wird eine ausgezeichnete Spanbildung während des Zerspanungsprozesses erreicht.

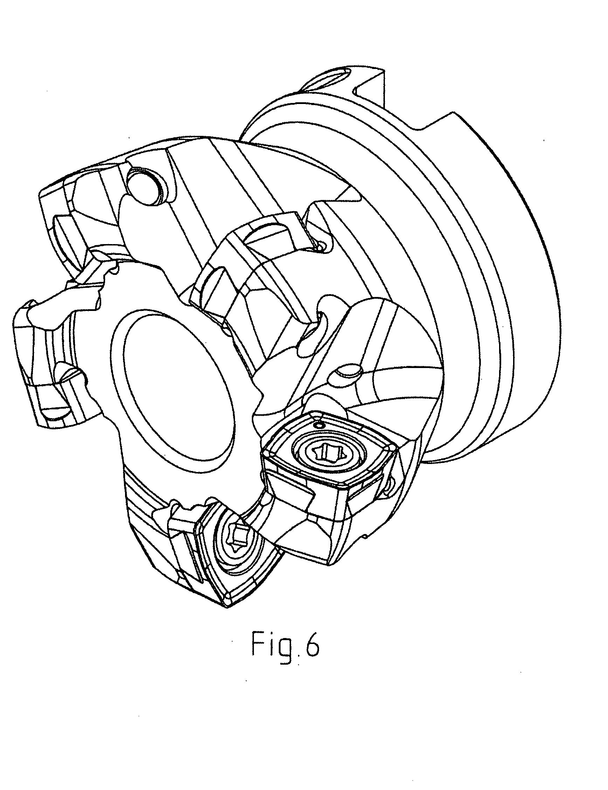

Die Positionierung von 5 erfindungsgemäß ausgeführten Schneideinsätzen entsprechend der Figuren 1 und 2 in einem geeigneten Werkzeuggrundkörper zum Planfräsen mit hohen Vorschubraten ist in Figur 6 dargestellt.

## Patentansprüche

1. Schneideinsatz mit im Wesentlichen dreieckförmiger oder quadratischer Grundform mit einer Deckfläche (1) und einer Grundfläche (2), die durch seitliche Freiflächen (3) miteinander in Verbindung stehen, wobei durch die Verschneidung von Deckfläche (1) und/oder Grundfläche (2) mit den Freiflächen (3) jeweils drei bzw. vier, in Draufsicht gesehen, konvexe Schneidkanten (4) ausgebildet sind, die jeweils zumindest aus einem Kreisbogen und mindestens einem im Wesentlichen geraden Abschnitt bestehen und die über Schneidecken (5) mit einem Eckenradius (Re) miteinander in Verbindung stehen, wobei
jede Schneidkante (4) anschließend an eine Schneidecke (5) eine gerade Planschneide (6) aufweist, **dadurch gekennzeichnet, dass** die Planschneide (6) mit einem kreisförmigen Abschnitt (7) mit einem Radius von maximal 80 % vom Radius (Ri) des Inkreises (10) in eine Hauptschneide (8) aus 1 bis 3 geraden Abschnitten (9) übergeht, wobei bei mehreren geraden Abschnitten (9) der Hauptschneide (8) die Übergangsbereiche zwischen diesen Abschnitten (9) kreisförmig mit einem Radius im Bereich von 50 % bis 200 % vom Radius (Ri) des Inkreises (10) ausgeführt sind und dass der Schneideinsatz weiters eine rundum laufende Schneidkantenfase (11) mit einem Fasenwinkel (α) aufweist, welcher im Wesentlichen entlang der Schneidecken (5) einen im Wesentlichen konstanten Wert im Bereich von -10° bis -20° aufweist und sich beidseitig anschließend an die Schneidecken (5) entlang eines Teilstückes (12) der Planschneide (6) bzw. der Hauptschneide (8), das im Bereich von 1 - 1,8 x dem Radius (Re) der Schneidecke (5) liegt, kontinuierlich auf einen im Wesentlichen konstanten Wert, entlang der restlichen Abschnitte von Planschneide (6) und Hauptschneide (8) sowie entlang dem kreisförmigen Abschnitt (7), ändert, der im Bereich von 0° bis -10° liegt.

2. Schneideinsatz nach Anspruch 1, **dadurch gekennzeichnet, dass** der kreisförmige Abschnitt (7) einen Radius von minimal 50 % vom Radius (Ri) des Inkreises (10) aufweist.

3. Schneideinsatz nach Anspruch 1 oder 2, **dadurch gekennzeichnet, dass** der Fasenwinkel (α) im Wesentlichen entlang der Schneidecken (5) einen konstanten Wert von etwa -15° und im konstanten Bereich entlang der Planschneide (6), entlang dem kreisförmigen Abschnitt (7) und im konstanten Bereich entlang der Hauptschneide (8) einen Wert von etwa 0° aufweist.

4. Schneideinsatz nach einem der Ansprüche 1 bis 3, **dadurch gekennzeichnet, dass** die Schneidkantenfase (11) eine Breite (b) im Bereich von 0,1 bis 0,4 mm aufweist.

5. Schneideinsatz nach einem der Ansprüche 1 bis 4, **dadurch gekennzeichnet, dass** die Länge der Planschneide (6) wenigstens 15 % vom Radius (Ri) des Inkreises (10) beträgt.

6. Schneideinsatz nach einem der Ansprüche 1 bis 5, **dadurch gekennzeichnet, dass** die einzelnen Schneidkanten (4) symmetrisch aufgebaut sind.

7. Schneideinsatz nach Anspruch 6, **dadurch gekennzeichnet, dass** an der Verschneidung von Deckfläche (1) und Grundfläche (2) mit den seitlichen Freiflächen (3) Schneidkanten (4) ausgebildet sind.

8. Schneideinsatz nach einem der Ansprüche 1 bis 7, **dadurch gekennzeichnet, dass** die seitlichen Freiflächen (3) mit Abstand von den Schneidkanten (4) plane Anlagenflächen (15) aufweisen.

9. Schneideinsatz nach einem der Ansprüche 1 bis 8, **dadurch gekennzeichnet, dass** die Freiflächen (3) anschließend an die Planschneide (6) und die geraden Abschnitte (9) der Hauptschneide (8) als plane Flächen (13) und anschließend an die kreisförmigen Abschnitte (7) als zylinderförmige Flächen (14) ausgeführt sind.

10. Schneideinsatz nach einem der Ansprüche 1 bis 9, **dadurch gekennzeichnet, dass** die Deckfläche (1) und/oder die Grundfläche (2) anschließend an die Schneidkantenfase (11) eine spanbrechende Geometrie aufweist.

## Claims

1. Cutting insert having a substantially triangular or square basic shape with a top surface (1) and a base surface (2) which are connected to one another by lateral flanks (3), wherein three or respectively four cutting edges (4), which are convex as seen in plan view, are formed by the intersection between top surface (1) and the flanks (3) and/or between base surface (2) and the flanks (3), which cutting edges (4) each consist of at least a circular arc and at least one substantially straight section and are connected to one another via cutting corners (5) having a corner radius (Re),
weherein
each cutting edge (4), adjacent to a cutting corner (5), has a straight wiper edge (6),
**characterized in that** the wiper edge (6), with a circular section (7) having a radius of at most 80% of the radius (Ri) of the inscribed circle (10), merges into a main cutting edge (8) consisting of one to three straight sections (9), wherein, in the case of a plurality of straight sections (9) of the main cutting edge (8), the transition regions between these sections (9) are embodied in a circular shape having a radius within the range of 50% to 200% of the radius (Ri) of the inscribed circle (10), and **in that**, furthermore, the cutting insert has a cutting edge chamfer (11) which runs all the way around and which has a chamfer angle (α) which has a substantially constant value within the range of -10° to -20° essentially along the cutting corners (5) and, adjacent to the cutting corners (5) on both sides, changes continuously along a segment (12) of the wiper edge (6) or of the main cutting edge (8), said segment (12) being within the range of 1-1.8 x the radius (Re) of the cutting corner (5), to a substantially constant value along the remaining sections of wiper edge (6) and main cutting edge (8) and along the circular section (7), said value being within the range of 0° to -10°.

2. Cutting insert according to Claim 1, **characterized in that** the circular section (7) has a radius of at least 50% of the radius (Ri) of the inscribed circle (10).

3. Cutting insert according to Claim 1 or 2, **characterized in that** the chamfer angle (α) has a constant value of about -15° essentially along the cutting corners (5) and a value of about 0° within the constant range along the wiper edge (6), along the circular section (7) and within the constant region along the main cutting edge (8).

4. Cutting insert according to one of Claims 1 to 3, **characterized in that** the cutting edge chamfer (11) has a width (b) within the range of 0.1 to 0.4 mm.

5. Cutting insert according to one of Claims 1 to 4, **characterized in that** the length of the wiper edge (6) is at least 15% of the radius (Ri) of the inscribed circle (10).

6. Cutting insert according to one of Claims 1 to 5, **characterized in that** the individual cutting edges (4) are constructed symmetrically.

7. Cutting insert according to Claim 6, **characterized in that** cutting edges (4) are formed at the intersection between top surface (1) and the lateral flanks (3) and at the intersection between base surface (2) and the lateral flanks (3).

8. Cutting insert according to one of Claims 1 to 7, **characterized in that** the lateral flanks (3) have planar bearing surfaces (15) at a distance from the cutting edges (4).

9. Cutting insert according to one of Claims 1 to 8, **characterized in that** the flanks (3) are embodied as planar surfaces (13) adjacent to the wiper edge (6) and the straight sections (9) of the main cutting edge (8) and as cylindrical surfaces (14) adjacent to the circular sections (7).

10. Cutting insert according to one of Claims 1 to 9, **characterized in that** the top surface (1) and/or the base surface (2) have/has a chip-breaking geometry adjacent to the cutting edge chamfer (11).

## Revendications

1. Plaquette de coupe de forme fondamentale sensiblement triangulaire ou carrée, comprenant une face de recouvrement (1) et une face de base (2) jointes entre elles par des faces de dépouilles latérales (3), dans laquelle les intersections de la face de recouvrement (1) et/ou de la face de base (2) avec les faces de dépouilles (3) forment respectivement trois ou quatre arêtes de coupe (4) convexes en vue en plan qui, chacune, sont constituées d'au moins un arc de cercle et d'au moins un segment sensiblement droit, et qui sont jointes entre elles par des coins de coupe (5) possédant un rayon d'angle (Re), chaque arête de coupe (4) comportant, à la suite d'un coin de coupe (5), une arête de planage (6) droite, caractérisée premièrement en ce que ladite arête de planage (6) se poursuit, par le biais d'un segment circulaire (7) possédant un rayon égal au maximum à 80 pour cent du rayon (Ri) du cercle inscrit (10), dans une arête principale (8) constituée de 1 à 3 segments droits (9), une pluralité de ces derniers présentant des secteurs de transition entre eux en forme circulaire possédant un rayon compris entre 50 pour cent et 200 pour cent du rayon (Ri) du cercle inscrit (10), caractérisée deuxièmement en ce que ladite plaquette de coupe comporte, en outre, sur toute sa circonférence, un biseau d'arête de coupe (11) qui présente un angle de biseau (α) possédant, principalement le long des coins de coupe (5), une valeur sensiblement constante et comprise entre -10 degrés et -20 degrés, et qui change progressivement, des deux côtés, à la suite des coins de coupe (5), le long d'un segment (12) de l'arête de planage (6) ou de l'arête principale (8) dont la valeur est comprise entre 1 et 1,8 fois le rayon (Re) du coin de coupe (5), pour adopter, le long des segments restants de l'arête de planage (6) et de l'arête principale (8) et le long du segment circulaire (7), une valeur sensiblement constante comprise entre 0 degré et -10 degrés.

2. Plaquette de coupe selon la revendication 1, **caractérisée en ce que** le segment circulaire (7) possède un rayon égal à 50 pour cent au moins du rayon (Ri) du cercle inscrit (10).

3. Plaquette de coupe selon la revendication 1 ou 2, **caractérisée en ce que** l'angle de biseau (α) présente, principalement le long des coins de coupe (5), une valeur constante égale à environ -15 degrés et, dans le secteur constant le long de l'arête de planage (6), le long du segment circulaire (7) et dans le secteur constant le long de l'arête principale (8), une valeur égale à environ 0 degré.

4. Plaquette de coupe selon l'une quelconque des revendications 1 à 3, **caractérisée en ce que** le biseau d'arête de coupe (11) possède une largeur (b) comprise entre 0,1 et 0,4 mm.

5. Plaquette de coupe selon l'une quelconque des revendications 1 à 4, **caractérisée en ce que** la longueur de l'arête de planage (6) est égale à 15 pour cent au moins du rayon (Ri) du cercle inscrit (10).

6. Plaquette de coupe selon l'une quelconque des revendications 1 à 5, **caractérisée en ce que** les différentes arêtes de coupe (4) sont agencées symétriquement.

7. Plaquette de coupe selon la revendication 6, **caractérisée en ce que** des arêtes de coupe (4) sont conformées à l'intersection des faces de recouvrement (1) et de base (2) avec les faces de dépouilles latérales (3).

8. Plaquette de coupe selon l'une quelconque des revendications 1 à 7, **caractérisée en ce que** les faces de dépouilles latérales (3) possèdent, dans un secteur espacé des arêtes de coupe (4), des faces de contact planes (15).

9. Plaquette de coupe selon l'une quelconque des revendications 1 à 8, **caractérisée en ce que** les faces de dépouille (3) sont conformées, à la suite de l'arête de planage (6) et des segments droits (9) de l'arête principale (8), en surfaces planes (13) et, à la suite des segments circulaires (7), en surfaces cylindriques (14).

10. Plaquette de coupe selon l'une quelconque des revendications 1 à 9, **caractérisée en ce que** la face de recouvrement (1) et/ou la face de base (2) possèdent, à la suite du biseau d'arête de coupe (11) une géométrie de brise-copeaux.
